(19) **Europäisches Patentamt / European Patent Office / Office européen des brevets**

(11) **EP 3 389 904 B1**

(12) **FASCICULE DE BREVET EUROPEEN**

(45) Date de publication et mention de la délivrance du brevet:
**20.04.2022 Bulletin 2022/16**

(21) Numéro de dépôt: **16825838.2**

(22) Date de dépôt: **13.12.2016**

(51) Classification Internationale des Brevets (IPC):
**B22F 7/06** *(2006.01)*  **C23C 24/08** *(2006.01)*
**F01D 11/12** *(2006.01)*  **B22F 3/105** *(2006.01)*

(52) Classification Coopérative des Brevets (CPC):
(C-Sets disponibles)
**B22F 3/105; B22F 7/06; C23C 24/08; F01D 11/12;
F01D 11/122;** B22F 2998/10; Y02T 50/60    (Cont.)

(86) Numéro de dépôt international:
**PCT/FR2016/053358**

(87) Numéro de publication internationale:
**WO 2017/103420 (22.06.2017 Gazette 2017/25)**

(54) **PROCEDE DE FABRICATION D'UN REVETEMENT ABRADABLE A DENSITE VARIABLE**

VERFAHREN ZUR HERSTELLUNG EINER ABREIBBAREN BESCHICHTUNG MIT VARIABLEN DICHTEN

METHOD OF MAKING AN ABRADABLE COATING HAVING VARIABLE DENSITIES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.12.2015 FR 1562318**

(43) Date de publication de la demande:
**24.10.2018 Bulletin 2018/43**

(73) Titulaires:
• **Safran Aircraft Engines**
  **75015 Paris (FR)**
• **Centre National de la Recherche Scientifique**
  **75016 Paris (FR)**
• **Université Paul Sabatier (Toulouse III)**
  **31400 Toulouse (FR)**

(72) Inventeurs:
• **LE BIEZ, Philippe, Charles, Alain**
  **77550 Moissy-Cramayel Cedex (FR)**
• **CHEVALLIER, Geoffroy**
  **31320 Auzeville-Tolosane (FR)**
• **EPHERRE, Romain**
  **31500 Toulouse (FR)**
• **ESTOURNES, Claude**
  **31370 Rieumes (FR)**
• **MOTTIN, Jean-Baptiste**
  **77550 Moissy-Cramayel Cedex (FR)**
• **SELEZNEFF, Serge, Georges, Vladimir**
  **77550 Moissy-Cramayel Cedex (FR)**

(74) Mandataire: **Cabinet Beau de Loménie
158, rue de l'Université
75340 Paris Cedex 07 (FR)**

(56) Documents cités:
EP-A1- 3 081 764        EP-A2- 2 317 079
WO-A1-2014/053754    FR-A1- 2 996 475
US-A1- 2014 263 579    US-A1- 2015 354 392

(52) Classification Coopérative des Brevets (CPC):
(Cont.)

C-Sets
B22F 2998/10

**Description**

DOMAINE DE L'INVENTION

Le présent exposé concerne un procédé de fabrication d'un revêtement abradable à densité variable.

Un tel revêtement abradable, ne faisant pas partie de l'invention, peut notamment être utilisé pour équiper un anneau de machine tournante afin d'assurer l'étanchéité de la machine au sommet des aubes tournantes par exemple. Un tel revêtement abradable est tout particulièrement adapté pour équiper les anneaux de turbine dans le domaine aéronautique, et tout particulièrement dans les turboréacteurs d'avion.

ETAT DE LA TECHNIQUE ANTERIEURE

Dans de nombreuses machines tournantes, il est désormais connu de munir l'anneau du stator de pistes abradables en regard du sommet des aubes du rotor. De telles pistes sont réalisées à l'aide de matériaux dit « abradables » qui, lorsqu'ils entrent en contact avec les aubes tournantes, s'usent plus facilement que ces dernières. On assure ainsi un jeu minimal entre le rotor et le stator, améliorant les performances de la machine tournante, sans risquer de détériorer les aubes en cas de frottement de ces dernières sur le stator. Au contraire, un tel frottement abrade la piste abradable, ce qui permet d'ajuster automatiquement le diamètre de l'anneau du stator au plus proche du rotor. Ainsi, de telles pistes abradables sont souvent mises en place dans les compresseurs de turbomachines.

En revanche, leur emploi est beaucoup plus rare dans les turbines de telles turbomachines, et surtout dans les turbines haute pression dans lesquelles règnent des conditions physico-chimiques extrêmes.

En effet, les gaz brûlés issus de la chambre de combustion débouchent dans la turbine haute pression à des niveaux de température et de pression très élevés, ce qui entraîne l'érosion prématurée des pistes abradables conventionnelles.

Dès lors, afin de protéger l'anneau de turbine, il est souvent préféré de munir ce dernier d'un revêtement du type barrière thermique dont les matériaux et la densité élevée, trop importante pour que le revêtement soit efficacement abradable, permettent de protéger l'anneau contre l'érosion et la corrosion.

Toutefois, on comprend naturellement que dans un tel cas l'intégrité des aubes n'est plus assurée en cas de contact avec le stator, ce qui nécessite de prévoir un jeu plus important entre le rotor et le stator et augmente donc le débit de fuite en sommet d'aubes et réduit ainsi les performances de la turbine.

On connaît également les documents US 2014/0263579, FR 2 996 475 et WO 2014/053754 qui décrivent d'autres procédés de fabrication d'un revêtement abradable.

Il existe donc un réel besoin pour un procédé de fabrication d'un revêtement abradable ainsi qu'un tel revêtement abradable qui soient dépourvus, au moins en partie, des inconvénients inhérents aux configurations connues précitées.

PRESENTATION DE L'INVENTION

Le présent exposé concerne un procédé de fabrication d'un revêtement abradable à densité variable, comprenant les étapes suivantes : fourniture d'un substrat comportant une première portion dont la surface se situe à un premier niveau et une deuxième portion, dont la surface de situe à un deuxième niveau différent du premier niveau ; dépôt d'un matériau précurseur sur les première et deuxième portions du substrat ; compression du matériau précurseur entre le substrat et une surface d'appui ; et frittage du matériau précurseur ainsi comprimé pour obtenir un revêtement abradable comprenant une première partie, en regard de la première portion du substrat, possédant une première densité et une deuxième partie, en regard de la deuxième portion du substrat, possédant une deuxième densité distincte de la première.

Ce procédé permet d'obtenir un revêtement à densité variable. En effet, grâce à la différence de niveau entre la première portion et la deuxième portion du substrat, la réduction du volume disponible au cours de l'étape de compression est d'autant plus importante que le substrat était proche de la surface d'appui dans l'état initial : en supposant par exemple que le deuxième niveau est plus profond que le premier niveau, la partie du matériau précurseur située au-dessus de la première portion du substrat est ainsi plus comprimée que la partie du matériau précurseur située au-dessus de la deuxième portion du substrat. Une pression plus importante règne donc dans cette partie du matériau précurseur, ce qui conduit à une densité plus importante du matériau après frittage. A l'inverse, dans la deuxième partie du matériau précurseur, la compression étant moins importante, la réduction du taux de porosité dans le matériau et donc sa densification sont moins importantes. Dans le présent exposé, on entend par « taux de porosité » le rapport entre le volume des espaces interstitiels séparant les grains du matériau considéré et le volume global dudit matériau. En outre, il va de soit au sens du présent exposé que les première et deuxième portions du substrat, tout comme les première et deuxième parties du revêtement abradable, possèdent une taille significative afin de remplir les fonctions auxquelles elles sont destinées. Ainsi, comme cela est visible sur les figures, chaque portion du substrat, et donc chaque partie de revêtement abradable, possède une largeur supérieure à 2 mm, de préférence supérieure à 5 mm, et donc une longueur encore supérieure.

Dès lors, grâce à ce procédé, on peut ajuster localement le taux de porosité final et donc la densité du revêtement afin de satisfaire à différentes exigences ou contraintes locales. Par exemple, il est possible de munir les zones du revêtement sensibles à l'érosion d'une densité élevée et munir les zones du revêtement destinées à entrer en contact avec un corps mobile d'une densité plus faible, renforçant le caractère facilement abradable de ces zones. De plus, il est également possible de disposer la première partie de revêtement, bénéficiant d'une grande densité, de manière à masquer et donc protéger la seconde partie du revêtement dont la densité est plus faible.

Dans certains modes de réalisation, la deuxième portion du substrat est obtenue par usinage d'au moins une rainure dans une ébauche du substrat. Un tel substrat à deux niveaux est ainsi facile à fabriquer puisqu'il suffit de fabriquer une ébauche régulière puis d'usiner une rainure dans cette ébauche uniquement aux endroits désirés.

Dans d'autres modes de réalisation, la première portion du substrat est obtenue en ajoutant au moins un muret sur une ébauche du substrat. Cette méthode est particulièrement adaptée pour réparer une pièce existante dont l'épaisseur n'est pas suffisante pour usiner une rainure.

Dans certains modes de réalisation, le muret est fabriqué directement sur l'ébauche du substrat par frittage, notamment par une méthode de frittage du type « Spark Plasma Sintering » (SPS).

Dans d'autres modes de réalisation, le muret est fabriqué indépendamment et rapporté par soudage ou brasage. Il peut notamment être rapporté par une méthode de soudage du type « Tungstene Inert Gas » (TIG).

Dans certains modes de réalisation, la surface d'appui est continue. On entend ici que la surface d'appui ne comporte aucune discontinuité telle qu'une marche ou un autre changement brusque de niveau.

Dans certains modes de réalisation, la surface d'appui est rectiligne au moins selon une direction transverse aux première et deuxième portions du substrat. Il existe ainsi un plan de coupe traversant à la fois la première et la deuxième portion du substrat dans lequel la surface d'appui est rectiligne.

Dans certains modes de réalisation, la surface d'appui prend la forme d'un secteur de cylindre, de préférence d'un secteur de cylindre de révolution.

Dans certains modes de réalisation, la surface d'appui est une surface d'un moule de forme.

Dans certains modes de réalisation, la première partie du revêtement abradable possède un taux de porosité final inférieur à 15%, de préférence inférieur à 5%. La première partie du revêtement possède ainsi une densité suffisamment élevée pour résister à l'érosion.

Dans certains modes de réalisation, la deuxième partie du revêtement abradable possède un taux de porosité final supérieur à 20%, de préférence supérieur à 30%. La deuxième partie du revêtement possède ainsi une densité suffisamment faible pour présenter un comportement facilement abradable.

Dans certains modes de réalisation, la première partie du revêtement abradable subit une densification d'au moins 150%, de préférence d'au moins 250%, au cours de l'étape de compression et de frittage. Dans le présent exposé, on entend par « densification » l'augmentation de la densité du matériau composant le revêtement abradable entre l'état initial au moment de l'étape de dépôt du matériau précurseur et l'état final obtenu après les étapes de compression et de frittage. Autrement dit, il s'agit de la différence entre la densité finale et la densité initiale rapportée sur la densité initiale.

Dans certains modes de réalisation, la deuxième partie du revêtement abradable subit une densification d'au plus 150%, de préférence d'au plus 100% au cours de l'étape de compression et de frittage.

Dans certains modes de réalisation, le procédé comprend en outre, avant l'étape de dépôt du matériau précurseur sur les première et deuxième portions du substrat, une étape de formation par frittage d'une couche talon, dont le taux de porosité final est inférieur à 15% et préférentiellement inférieur à 5%, sur la deuxième portion du substrat. Cette couche talon permet de conserver une couche fortement densifiée sous la deuxième partie, peu densifiée, du revêtement abradable. Ainsi, le substrat reste protégé en cas de déplacement radial du corps circulant en regard du revêtement supérieur au déplacement maximal envisagé. Ceci protège notamment le substrat en cas de balourd important du corps mobile par exemple.

Dans certains modes de réalisation, le procédé comprend en outre, après l'étape de frittage du matériau précurseur, une étape de formation par frittage d'une couche de surface, dont le taux de porosité final est inférieur à 15% et préférentiellement inférieur à 5%, sur au moins une partie du revêtement abradable, préférentiellement sur sa partie centrale. Cette couche permet de doter le revêtement d'une faible rugosité de surface. Elle est de préférence formée sur toute la surface du revêtement abradable.

Dans certains modes de réalisation, l'épaisseur de la couche de surface est comprise entre 0,05 et 0,10 mm.

Dans certains modes de réalisation, le matériau précurseur est une poudre métallique ou céramique.

Dans certains modes de réalisation, le substrat est un secteur d'anneau. Il peut notamment s'agir d'un secteur d'anneau de turbine qui sera monté au stator de la turbine.

Dans certains modes de réalisation, la première portion du substrat s'étend le long de la deuxième portion du substrat.

Dans certains modes de réalisation, le substrat possède un canal longitudinal encadré par deux épaulements longitudinaux, les épaulements faisant partie de la première portion du substrat et le fond du canal faisant partie de la deuxième portion du substrat. On obtient ainsi à l'issue du procédé une bande peu dense, donc facilement abradable, dans la zone susceptible d'entrer en contact avec les aubes d'un rotor par exemple et deux bandes de revêtement plus dense de part et d'autre de la bande abradable permettant de protéger cette dernière de l'érosion provoquée par la circulation axiale d'une veine d'air par exemple.

Le présent exposé concerne également une piste abradable à densité variable, ne faisant pas partie de l'invention, comprenant une première partie comportant un matériau fritté possédant une première densité, et une deuxième partie, contiguë à la première portion et affleurant cette dernière, comportant un matériau fritté possédant une deuxième densité distincte de la première densité.

Comme cela est expliqué ci-dessus, ceci permet de protéger les zones les plus sensibles à l'érosion tout en offrant une couche facilement abradable dans les zones destinées à entrer en contact avec le corps mobile.

Dans certains modes de réalisation, l'épaisseur de la première partie de la piste abradable est inférieure à l'épaisseur de la deuxième partie.

Dans certains modes de réalisation, la piste abradable est obtenue à l'aide d'un procédé de fabrication selon l'un quelconque des modes de réalisation précédents.

Le présent exposé concerne également un anneau de turbine ou de compresseur comprenant une piste abradable selon l'un quelconque des modes de réalisation précédents.

Le présent exposé concerne également une turbomachine comprenant une piste abradable ou un anneau de turbine ou de compresseur selon l'un des modes de réalisation précédents.

Les caractéristiques et avantages précités, ainsi que d'autres, apparaîtront à la lecture de la description détaillée qui suit, d'exemples de réalisation du dispositif et du procédé proposés. Cette description détaillée fait référence aux dessins annexés.

## BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.

La FIG 1 est un plan en coupe d'une turbomachine selon l'invention.
La FIG 2 est une vue partielle en perspective d'un exemple d'anneau de stator selon l'invention.
Les FIG 3A à 3E illustrent plusieurs étapes successives d'un exemple de procédé selon l'invention.
La FIG 4 est une vue en coupe d'un deuxième exemple de piste abradable.
La FIG 5 est une vue en coupe d'un troisième exemple de piste abradable.

## DESCRIPTION DETAILLEE D'EXEMPLE(S) DE REALISATION

Afin de rendre plus concrète l'invention, des exemples de procédés de fabrication de pistes abradables sont décrits en détail ci-après, en référence aux dessins annexés. Il est rappelé que l'invention ne se limite pas à ces exemples.

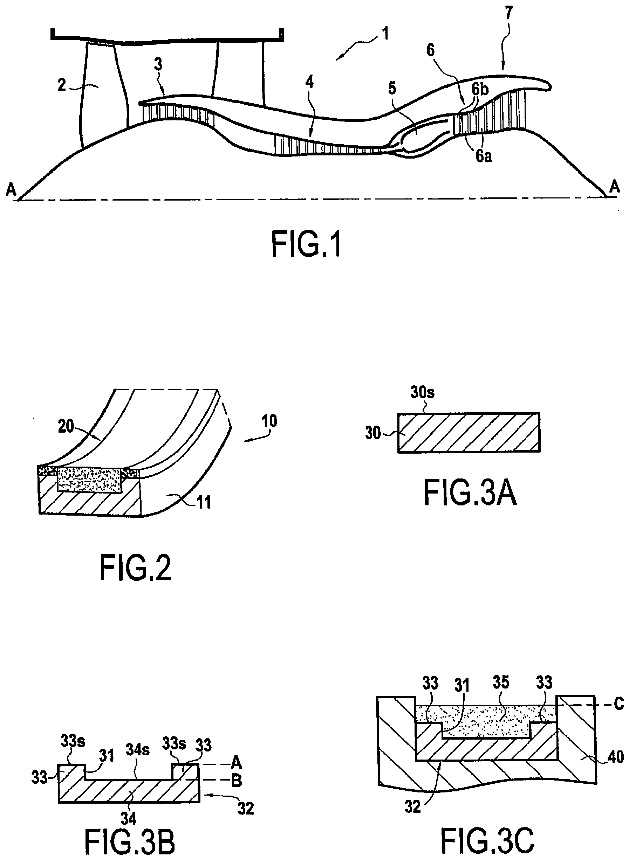

La FIG 1 représente, en coupe selon un plan vertical passant par son axe principal A, un turboréacteur à double flux 1 selon l'invention. Il comporte, d'amont en aval selon la circulation du flux d'air, une soufflante 2, un compresseur basse pression 3, un compresseur haute pression 4, une chambre de combustion 5, une turbine haute pression 6, et une turbine basse pression 7.

La turbine haute pression 6 comprend une pluralité d'aubes 6a tournant avec le rotor et de redresseurs 6b montés sur le stator. Le stator de la turbine 6 comprend une pluralité d'anneaux de stator 10 disposés en vis-à-vis des aubes mobile 6a de la turbine 6. Comme cela est visible sur la FIG 2, chaque anneau de stator 10 est divisé en plusieurs secteurs 11 munis chacun d'une piste abradable 20 sur laquelle viennent frotter les aubes mobiles 6a en cas d'excursion radiale du rotor.

Un exemple de réalisation d'une telle piste abradable 20 va être décrit en référence aux FIG 3A à 3E. En FIG 3A, une ébauche 30 est tout d'abord fournie. En l'espèce, il s'agit d'un secteur d'anneau obtenu selon une méthode conventionnelle. Sa surface 30s est régulière, rectiligne dans le plan de coupe axial de la FIG 3A, et en arc de cercle dans un plan de coupe radial.

Comme cela est représenté à la FIG 3B, une rainure 31 est ensuite usinée longitudinalement, c'est-à-dire circonférentiellement, en surface de l'ébauche 30 de manière à former un canal : on obtient ainsi un substrat 32 possédant deux épaulements 33 encadrant la rainure 31 en amont et en aval respectivement.

Les deux épaulements forment ensemble une première portion 33 de substrat dont la surface 33s s'étend à un premier niveau A correspondant au niveau initial de l'ébauche 30. La portion du substrat 32 située au fond de la rainure 31 forme quant à elle une deuxième portion 34 de substrat dont la surface 34s s'étend à un deuxième niveau B inférieur, c'est-à-dire plus profond, que le premier niveau A et correspondant au fond de la rainure 31. Dans le présent exemple, la rainure 31 est profonde de 12 mm, autrement dit la différence entre les niveaux A et B vaut 12 mm.

Comme cela est représenté à la FIG 3C, le substrat 32 ainsi formé est ensuite disposé dans la cavité d'un moule de forme 40 dont les dimensions axiales correspondant à celle du substrat 32.

Un matériau précurseur 35, en l'occurrence une poudre métallique, est alors déposée de manière uniforme sur l'ensemble du substrat 32 : la poudre 35 remplit ainsi l'intégralité du canal 31 et forme une couche continue d'épaisseur constante au-dessus du niveau A des épaulements 33 du substrat 32. La poudre 35 est ainsi ajoutée jusqu'à atteindre un troisième niveau C : dans le présent exemple, ce niveau C est prévu 20 mm au-dessus du niveau A des épaulements 33 du substrat. Dans le présent exemple, la poudre est une poudre de nickel de granulométrie centrée autour de 100 $\mu$m ; son taux de porosité initial est d'environ 70%.

Naturellement, ce taux de porosité initial peut varier selon le type de poudre utilisé et les taux de porosités finaux souhaités : par exemple, pour des poudres de nickel ayant une granulométrie d'environ 4 à 7 $\mu$m, ce taux de porosité initial peut être d'environ 23 à 33%. Préférentiellement des poudres à fort taux de porosité initial seront utilisées pour la zone abradable à faible densité. En outre, il est possible d'obtenir un taux de porosité initial plus important en ajoutant à ces poudres un agent porogène qui sera éliminé ultérieurement au cours du procédé, au cours d'une étape de pyrolyse par exemple.

Par contre des poudres plus fines et à taux de porosité initial plus faible pourront être utilisées pour des zones à plus forte densité comme les murets, la couche talon ou la couche superficielle à faible rugosité qui seront décrits plus bas.

Ainsi, la poudre 35 forme une couche de 20 mm d'épaisseur au niveau des épaulements 33 et de 32 mm d'épaisseur au niveau du canal 31.

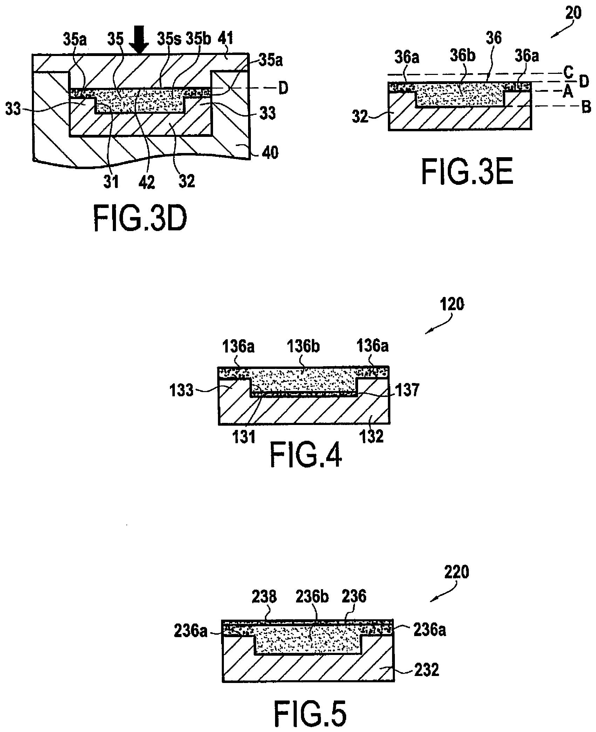

Comme cela est représenté à la FIG 3D, le moule 40 est ensuite refermé. Une face d'appui 42 de son couvercle 41, rectiligne dans le plan axial de la FIG 3D et en arc de cercle dans un plan radial, s'applique alors contre la surface 35s de la couche de poudre 35.

Une contrainte est alors exercée sur le couvercle 41 du moule 40 pour appuyer sur la couche de poudre 35 et comprimer cette dernière entre le substrat 32 et la face d'appui 42 du couvercle 41 du moule 40. La couche de poudre 35 est ainsi comprimée jusqu'à un quatrième niveau D s'étendant en l'espèce 4,2 mm au-dessus des épaulements 33 du substrat soit 4,2 mm au-dessus du niveau A.

Au cours de cette étape de compression, les particules de poudre 35 sont tassées les unes contre les autres et remplissent donc certains vides présents initialement entre les particules, l'air ainsi chassé étant évacué hors du moule 40. Le taux de porosité de la poudre diminue donc au cours de cette étape de compression et la densité de la poudre augmente.

Toutefois, cette densification dépend de la position du volume de poudre considéré au sein de la couche de poudre 35. En effet, si l'on néglige les phénomènes de migration latérale de la poudre, les volumes de poudre 35a situés entre les épaulements 33 et la surface d'appui 42 subissent une diminution de volume disponible et donc une compression plus importante que le volume de poudre 35b situé dans et au-dessus du canal 31.

En effet, au-dessus des épaulements 33, l'épaisseur initialement disponible correspond à la différence de niveau entre les niveaux A et C soit 20 mm dans cet exemple tandis que l'épaisseur disponible après compression correspond à la différence de niveaux entre les niveaux A et D soit 4,2 mm : le volume de poudre 35a subit ainsi une réduction de 79% de volume.

En revanche, au-dessus de la deuxième portion 34 du substrat 32, l'épaisseur initialement disponible correspond à la différence de niveau entre les niveaux B et C soit 32 mm dans cet exemple tandis que l'épaisseur disponible après compression correspond à la différence de niveaux entre les niveaux B et D soit 16.2 mm : le volume de poudre 35a subit ainsi une réduction de 49% de volume.

Dès lors, dans la mesure où la masse de poudre reste constante dans chaque volume 35a et 35b de poudre, il est possible de calculer la densification du matériau à l'aide de la formule suivante dans laquelle $e_i$ est l'épaisseur initiale du matériau et $e_f$ est son épaisseur finale :

$$densification = \frac{d_f - d_i}{d_i} = \frac{m/V_f - m/V_i}{m/V_i} = \frac{V_i - V_f}{V_f} = \frac{e_i - e_f}{e_f}$$

On en déduit alors que le premier volume de poudre 35a subit une densification, c'est-à-dire une augmentation de sa densité, de 376% tandis que le deuxième volume de poudre 35b subit une densification de 98%.

Une fois un tel état comprimé obtenu, la couche de poudre 35 ainsi comprimée de manière différentielle est frittée à l'aide d'une méthode conventionnelle.

A l'issu de cette étape de frittage on obtient alors la piste abradable 20 de la FIG 3E dans laquelle le substrat 32 est recouvert d'un revêtement 36 comprenant une première partie 36a surmontant les épaulements 33, possédant une épaisseur de 4.2 mm et un taux de porosité final de 14.7%, et une deuxième partie 36b surmontant le canal 31 possédant une épaisseur de 16,2 mm et un taux de porosité final de 35,7%.

A cet égard, le taux de porosité final $P_f$ peut être calculé de manière générale en fonction du taux de porosité initial $P_i$ et du taux de compression Tc, c'est-à-dire de la réduction de volume, de la portion de matériau considéré : $P_f = P_i(1 - Tc)$

Naturellement, la profondeur de la rainure 31, l'épaisseur initiale de poudre 35 et l'amplitude de compression peuvent être réglés librement pour atteindre les densités et les épaisseurs de revêtement voulues.

De plus, dans cet exemple, le canal 31 du substrat s'étendant à un niveau B inférieur à celui des épaulements 33 est une rainure obtenue par usinage de l'ébauche 30. Toutefois, dans une variante du premier exemple, un canal analogue pourrait être obtenu en rapportant des murets sur l'ébauche 30 formant des épaulements 33 encadrant le canal 31 : dans un tel cas, le niveau initial de l'ébauche définit le niveau B de fond de canal 31 tandis que le sommet des murets définit le niveau A.

Dans un deuxième exemple, illustré à la FIG 4, le procédé comprend une étape supplémentaire ayant lieu juste après la fourniture d'un substrat 132 à deux niveau A et B. Une couche talon 137 de forte densité, possédant par exemple une porosité finale de 0 à 15% est mise en place au fond du canal 131 par frittage d'une poudre. La suite du procédé est inchangée par rapport au premier exemple, la couche de matériau précurseur étant déposée au-dessus des épaulements 133 et de cette couche talon 137. A l'issue du procédé, on obtient ainsi la piste abradable 120 de la FIG 4 dans laquelle la deuxième partie du revêtement 136b à moindre densité recouvre la couche talon 137, cette dernière protégeant le substrat en cas de déplacement radial du corps circulant en regard du revêtement supérieur au déplacement maximal envisagé, en cas de balourd important du corps mobile par exemple.

Dans un troisième exemple, compatible avec les premier et deuxième exemples et illustré à la FIG 5, le procédé comprend une étape supplémentaire ayant lieu juste après les étapes de compression et de frittage de la poudre, le début du procédé étant inchangé par rapport au premier ou au deuxième exemple. Une couche de surface 238 de forte densité, possédant par exemple une porosité finale de 0 à 15%, et de faible épaisseur, comprise par exemple entre 0,05 et 0,10 mm, est mise en place par frittage d'une poudre en surface du revêtement à densité variable 236. A l'issue du procédé, on obtient ainsi la piste abradable 220 de la FIG 5 dans laquelle la couche de surface 238, possédant une rugosité de surface moins importante que la deuxième partie du revêtement 236b à moindre densité et donc un gain sur le frottement aérodynamique, recouvre la totalité du revêtement 236.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé.

**Revendications**

**1.** Procédé de fabrication d'un revêtement abradable à densité variable, comprenant les étapes suivantes :

fourniture d'un substrat (32) comportant une première portion (33) dont la surface (33s) se situe à un premier niveau (A) et une deuxième portion (34), dont la surface (34s) se situe à un deuxième niveau (B) différent du premier niveau ;
dépôt d'un matériau précurseur (35) sur les première et deuxième portions (33, 34) du substrat (32) ;
compression du matériau précurseur (35) entre le substrat (32) et une surface d'appui (42) ; et
frittage du matériau précurseur (35) ainsi comprimé pour obtenir un revêtement abradable (36) comprenant une première partie (36a), en regard de la première portion (33) du substrat (32), possédant une première densité et une deuxième partie (36b), en regard de la deuxième portion (34) du substrat (32), possédant une deuxième densité distincte de la première.

**2.** Procédé selon la revendication 1, dans lequel la deuxième portion (34) du substrat (32) est obtenue par usinage d'au moins une rainure (31) dans une ébauche (30) du substrat.

**3.** Procédé selon la revendication 1 ou 2, dans lequel la surface d'appui (42) est continue et rectiligne au moins selon une direction transverse aux première et deuxième portions (33, 34) du substrat (32).

**4.** Procédé selon l'une quelconque des revendications 1 à 3, dans lequel la première partie (36a) du revêtement abradable (36) possède un taux de porosité final inférieur à 15%, de préférence inférieur à 5%.

**5.** Procédé selon l'une quelconque des revendications 1 à 4, dans lequel la deuxième partie (36b) du revêtement abradable (36) possède un taux de porosité final supérieur à 20%, de préférence supérieur à 30%.

**6.** Procédé selon l'une quelconque des revendications 1 à 5, comprenant en outre, avant l'étape de dépôt du matériau précurseur sur les première et deuxième portions du substrat, une étape de formation par frittage d'une couche talon (137), dont le taux de porosité final est inférieur à 15%, sur la deuxième portion du substrat (132).

**7.** Procédé selon l'une quelconque des revendications 1 à 6, comprenant en outre, après l'étape de frittage du matériau précurseur, une étape de formation par frittage d'une couche de surface (238), dont le taux de porosité final est inférieur à 15%, sur au moins une partie du revêtement abradable (236).

**8.** Procédé selon l'une quelconque des revendications 1 à 7, dans lequel le substrat est un secteur d'anneau (11).

**9.** Procédé selon l'une quelconque des revendications 1 à 8, dans lequel le substrat (32) possède un canal longitudinal (31) encadré par deux épaulements longitudinaux (33), les épaulements (33) faisant partie de la première portion du substrat et le fond du canal (31) faisant partie de la deuxième portion du substrat.

**Patentansprüche**

**1.** Verfahren zur Herstellung einer abreibbaren Beschichtung mit variabler Dichte, das die folgenden Schritte umfasst:

Liefern eines Substrats (32), das einen ersten Abschnitt (33), dessen Oberfläche (33s) sich auf einer ersten Ebene (A) befindet, und einen zweiten Abschnitt (34) umfasst, dessen Oberfläche (34s) sich auf einer zweiten Ebene (B) befindet, die sich von der ersten Ebene unterscheidet;
Aufbringen eines Vorläufermaterials (35) auf dem ersten und dem zweiten Abschnitt (33, 34) des Substrats (32);
Verdichten des Vorläufermaterials (35) zwischen dem Substrat (32) und einer Auflageoberfläche (42); und
Sintern des so verdichteten Vorläufermaterials (35), um eine abreibbare Beschichtung (36) zu erhalten, die einen ersten Teil (36a) dem ersten Abschnitt (33) des Substrats (32) gegenüberstehend, der eine erste Dichte besitzt, und einen zweiten Teil (36b) dem zweiten Abschnitt (34) des Substrats (32) gegenüberstehend umfasst, der eine zweite Dichte besitzt, die unterschiedlich von der ersten ist.

**2.** Verfahren nach Anspruch 1, wobei der zweite Abschnitt (34) des Substrats (32) durch Bearbeiten mindestens einer Rille (31) in einem Rohling (30) des Substrats erhalten wird.

**3.** Verfahren nach Anspruch 1 oder 2, wobei die Auflageoberfläche (42) zumindest entlang einer Richtung quer zu dem ersten und dem zweiten Abschnitt (33, 34) des Substrats (32) ununterbrochen und geradlinig ist.

**4.** Verfahren nach einem der Ansprüche 1 bis 3, wobei der erste Teil (36a) der abreibbaren Beschichtung (36) einen Endporositätsgrad von niedriger als 15 %, vorzugsweise niedriger als 5 %, besitzt.

**5.** Verfahren nach einem der Ansprüche 1 bis 4, wobei der zweite Teil (36b) der abreibbaren Beschichtung (36) einen Endporositätsgrad von höher als 20 %, vorzugsweise höher als 30 %, besitzt.

**6.** Verfahren nach einem der Ansprüche 1 bis 5, das ferner vor dem Schritt des Aufbringens des Vorläufermaterials auf dem ersten und dem zweiten Abschnitt des Substrats einen Schritt des Bildens einer Absatzschicht (137), deren Endporositätsgrad niedriger als 15 % ist, durch Sintern auf dem zweiten Abschnitt des Substrats (132) umfasst.

**7.** Verfahren nach einem der Ansprüche 1 bis 6, das ferner nach dem Schritt des Sinterns des Vorläufermaterials einen Schritt des Bildens einer Oberflächenschicht (238), deren Endporositätsgrad niedriger als 15 % ist, durch Sintern auf zumindest einem Teil der abreibbaren Beschichtung (236) umfasst.

**8.** Verfahren nach einem der Ansprüche 1 bis 7, wobei das Substrat ein Ringsektor (11) ist.

**9.** Verfahren nach einem der Ansprüche 1 bis 8, wobei das Substrat (32) einen Längskanal (31) besitzt, der von zwei Längsschultern (33) umrandet ist, wobei die Schultern (33) Teil des ersten Abschnitts des Substrats sind und der Boden des Kanals (31) Teil des zweiten Abschnitts des Substrats ist.

**Claims**

1. A fabrication method for an abradable coating of varying density, the method comprising the following steps:

   providing a substrate (32) having a first portion (33) with its surface (33s) situated at a first level (A), and a second portion (34) with its surface (34s) situated at a second level (B) different from the first level; depositing a precursor material (35) on the first and second portions (33, 34) of the substrate (32); compressing the precursor material (35) between the substrate (32) and a bearing surface (42); and sintering the precursor material (35) as compressed in this way in order to obtain an abradable coating (36) having a first portion (36a) on the first portion (33) of the substrate (32), and possessing a first density, and a second portion (36b) on the second portion (34) of the substrate (32), and possessing a second density distinct from the first.

2. A method according to claim 1, wherein the second portion (34) of the substrate (32) is obtained by machining at least one groove (31) in a blank (30) of the substrate.

3. A method according to claim 1 or claim 2, wherein the bearing surface (42) is continuous and rectilinear at least in a direction extending transversely relative to the first and second portions (33, 34) of the substrate (32) .

4. A method according to any one of claims 1 to 3, wherein the first portion (36a) of the abradable coating (36) possesses final porosity of less than 15%, preferably less than 5%.

5. A method according to any one of claims 1 to 4, wherein the second portion (36b) of the abradable coating (36) possesses final porosity greater than 20%, preferably greater than 30%.

6. A method according to any one of claims 1 to 5, further comprising, before the step of depositing the precursor material on the first and second portions of the substrate, a step of forming by sintering a backing layer (137) on the second portion of the substrate (132), the final porosity of the backing layer being less than 15%.

7. A method according to any one of claims 1 to 6, further comprising, after the step of sintering the precursor material, a step of forming by sintering a surface layer (238) on at least a portion of the abradable coating (236), the surface layer having final porosity of less than 15%.

8. A method according to any one of claims 1 to 7, wherein the substrate is a ring sector (11).

9. A method according to any one of claims 1 to 8, wherein the substrate (32) possesses a longitudinal channel (31) between two longitudinal shoulders (33), the shoulders (33) forming part of the first portion of the substrate, and the bottom of the channel (31) forming part of the second portion of the substrate.

**FIG.1**

**FIG.2**

**FIG.3A**

**FIG.3B**

**FIG.3C**

FIG.3D

FIG.3E

FIG.4

FIG.5

## RÉFÉRENCES CITÉES DANS LA DESCRIPTION

### Documents brevets cités dans la description

- US 20140263579 A
- FR 2996475
- WO 2014053754 A